# EUROPÄISCHE PATENTSCHRIFT

(11) **EP 2 651 108 B1**
(45) Veröffentlichungstag und Bekanntmachung des Hinweises auf die Patenterteilung: **06.04.2016**
(21) Anmeldenummer: 12167416.2
(22) Anmeldetag: 10.05.2012
(51) Int. Cl.: H04M 11/02, H04L 12/28

(54) **Verfahren zur Signalisierung von Zuständen und/oder Ereignissen von Hausgeräten mittels eines Türkommunikationssystems**
Method for signalling states and/or events of domestic appliances by means of a door communication system
Procédé de signalisation d'états et/ou d'événements d'appareils ménagers au moyen d'un système de communication de porte

(30) Priorität: 13.04.2012 DE 102012103201
(43) Veröffentlichungstag der Anmeldung: 16.10.2013
(73) Patentinhaber: GIRA GIERSIEPEN GmbH & Co. KG, 42477 Radevormwald (DE)
(72) Erfinder: Steinmetzler, Andreas, 51709 Marienheide (DE)
(74) Vertreter: Patentanwälte Dr. Solf & Zapf

(56) Entgegenhaltungen:
- EP-A2- 1 422 917
- DE-A1-102004 007 746
- US-A1- 2009 260 044

## Beschreibung

Die Erfindung richtet sich auf ein Verfahren zur Signalisierung von Zuständen und/oder Ereignissen von Hausgeräten mittels eines Türkommunikationssystems (TKS), wobei ein Zustand und/oder ein Ereignis mindestens eines Hausgerätes erfasst wird, und eine Sprachnachricht basierend auf dem Zustand und/oder dem Ereignis anhand einer gespeicherten Zuordnungstabelle ausgewählt wird, und die ausgewählte Sprachnachricht als analoges Audio-Signal oder als digitaler Audio-Datenstrom zur Ausgabe an eine TKS-Station übermittelt wird. Außerdem richtet sich die Erfindung auf eine Sprachlogikeinheit und ein Türkommunikationssystem zur Durchführung eines derartigen Verfahrens.

In der Hausautomatisierungstechnik werden elektronische Hausgeräte, wie zum Beispiel Türstationen, Wohnungsstationen, Alarmanlage, Telefonanlage, Beleuchtung, Küchengeräte, Heizung/Klimaanlage, Rollladen und Multimediageräte wie Fernseher oder Stereoanlage, in einem Haus miteinander vernetzt. Ein derartiges Haus-Netzwerk besteht aus verschiedenen Netzwerk-Systemen, wie z.B. einem analogen Zweidraht- TK-Bus, einem digitalen IP-TK-Bus, einem KNX-Bus oder Ethernet, die über Netzwerk-Gateways miteinander verbunden sind. Bei einer derartigen Vernetzung wird eine komplexe Steuerung und Kontrolle der Hausgeräte über spezielle Bedien- und/oder Anzeigeeinheiten ermöglicht. Zum Beispiel werden Zustände einer Alarmanlage von einer Bedieneinheit grafisch dargestellt. Derartige Bedieneinheiten sind sehr aufwändig, da viele verschiedene Zustände, Abhängigkeiten und Verknüpfungen grafisch dargestellt werden. Bekannt sind Bedieneinheiten, die die Zustände mittels aufwändigen Displays oder einer Vielzahl von einzelnen LEDs anzeigen. Um es z. B. einem Benutzer einer Alarmanlage zu ermöglichen, den Zustand der Alarmanlage am Eingangsbereich zu kontrollieren, werden separate Bedien- und Anzeigeelemente angeboten. Diese sind nicht in einer vorhandenen Türstation integriert. Es sind auch Türstationen mit separaten Authentifizierungsmitteln bekannt, die z.B. über Gateways mit einer Alarmanlage eines KNX-Bus-Systems unidirektional kommunizieren können. Hier fehlt jedoch die Möglichkeit einer Statusrückmeldung von der Alarmanlage in Richtung TKS-Station. Die Herstellung einer Türstation mit Statusrückmeldung, z.B. mittels eines Displays ist jedoch aufwändig und nicht kostengünstig. Zudem ist es nicht möglich, bestehende Türstationen, die lediglich einfache Tasten, einen Lautsprecher und ein Mikrofon aufweisen, für eine derartige Kontrolle einer Alarmanlage zu verwenden.

Die DE 10 2004 007 746 A1 beschreibt eine Telekommunikationsanlage, bei der von einer Lichtrufanlage generierte Meldungen über einen Transferserver an Telekommunikationsendgeräte weitergeleitet werden. Dabei kann dem Transferserver auch eine Text-to-Speech-Maschine zugeordnet sein, die die generierten Meldungen in Sprachnachrichten umsetzt.

Die EP 1 422 917 A2 offenbart ein Verfahren zur Steuerung einer Türsprechanlage, wobei eine Türstation ein Steuersignal über ein Netzgerät an ein Wohntelefon überträgt. Dabei werden die Steuersignale in ein KNX-EIB-Signal eines Gebäudebussystems umgewandelt.

Die US 2009/0260044 A1 beschreibt einen Home Server, der eine Text-to-Speech Maschine umfasst. Dabei kann der Home Server gespeicherte Textnachrichten in gesprochene Audio-Signale umwandeln.

Die bekannten Verfahren haben den Nachteil, dass Zustände immer nur individuell verarbeitet werden und somit Zusammenhänge zwischen mehreren Zuständen von einzelnen Geräten oder von verschiedenen Geräten nur seriell abgearbeitet werden, was für die Kommunikation der Zusammenhänge und der Zustände nicht effektiv ist.

Der Erfindung liegt daher die Aufgabe zugrunde, eine Lösung zu schaffen, die es ermöglicht, Zustände und Ereignisse von Hausgeräten in einem Haus-Netzwerk über einfache TKS-Stationen ohne zusätzliche Anzeigemittel zu kontrollieren und als Informationsquelle zu nutzen.

Bei einem Haus-Netzwerk der eingangs beschriebenen Art wird die Aufgabe durch ein Verfahren zur Signalisierung von Zuständen und/oder Ereignissen von Hausgeräten mittels eines Türkommunikationssystems gelöst, wobei mehrere Zustände und/oder Ereignisse eines Hausgerätes oder mehrerer Hausgeräte erfasst und einer Liste von ausgewählten Sprachnachrichten zugeordnet werden, und die Liste von ausgewählten Sprachnachrichten vor der Übermittlung an die TKS-Station zu einer komplexen Sprachnachricht zusammengesetzt wird.

Dies hat den Vorteil, dass mehrere Zustände und/oder Ereignisse eines Hausgerätes und/oder mehrerer unterschiedlicher Hausgeräte verknüpft werden können und entsprechende zugeordnete Sprachnachrichten zu einer komplexen Sprachnachricht, welche aus mehreren aneinander gereihten oder verschachtelten Sprachnachrichten besteht, zusammengefasst werden können. Dies ermöglicht unter anderem, Abhängigkeiten von Zuständen und/oder Ereignissen innerhalb eines Hausgerätes oder zwischen verschiedenen Hausgeräten durch eine zusammenhängende Sprachnachricht darzustellen und an den Benutzer zu kommunizieren.

Ein solches Verfahren ermöglicht die Ausgabe von Sprachnachrichten, die mehrere Zustände und/oder Ereignisse eines Hausgerätes oder mehrerer Hausgeräte durch ein von einem Benutzer verständliches Sprachsignal beschreiben. Dabei kann ein beliebig komplexes Sprachsignal verwendet werden, um den Zustand und/oder das Ereignis ausführlich und verständlich durch Wort und Satzstrukturen zu beschreiben. Da jede TKS-Station einen Lautsprecher aufweist, kann die Sprachnachricht auf jeder TKS-Station ausgegeben werden, ohne eine Anzeigeeinheit in der TKS-Station zu benötigen.

In einer Ausführungsform der Erfindung wird die zugeordnete Sprachnachricht aus einer Liste von digital gespeicherten Sprachnachrichten ausgewählt. Dies hat den Vorteil einer besonders einfachen Ausgestaltung einer Sprachlogikeinheit zur Durchführung des Verfahrens, bei der wenig Prozessorleistung benötigt wird, und die Sprachnachrichten besonders schnell ausgegeben werden können.

In einer alternativen Ausgestaltung wird die zugeordnete Sprachnachricht dynamisch generiert, indem der Zustand und/oder das Ereignis des Hausgerätes zunächst einem textuellen Sprachsyntax zugeordnet wird, der aus einer Liste von gespeicherten textuellen Sprachsyntaxen ausgewählt wird, und danach der zugeordnete textuelle Sprachsyntax in eine Sprachnachricht mittels Sprachsynthese umgewandelt wird. Dies hat den Vorteil, dass die Sprachnachrichten einfach und dynamisch durch Veränderung eines Textes variiert werden können und weniger Speicher für die Speicherung der Sprachsyntaxe benötigt wird als für die Speicherung der digitalen Sprachnachrichten.

In einer Ausführungsform ist die Sprachlogikeinheit als separates Gerät, insbesondere im IP-Netzwerk oder im TK-Bus, ausgebildet. Dies hat den Vorteil, dass die Funktionalität unabhängig von zusätzlichen Gateways zur Verfügung gestellt werden kann.

In einer weiteren Ausführungsform ist die Sprachlogikeinheit als zusätzliches Modul eines Gateways, insbesondere eines TKS-IP-Gateways oder eines KNX-IP-Gateways, ausgebildet und in diesem integriert. Dies hat den Vorteil, bestehende Geräte zu nutzen und die Funktionen ohne zusätzliche Geräte insbesondere als eine Erweiterung eines bereits vorhandenen Gateways zur Verfügung zu stellen.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigt:

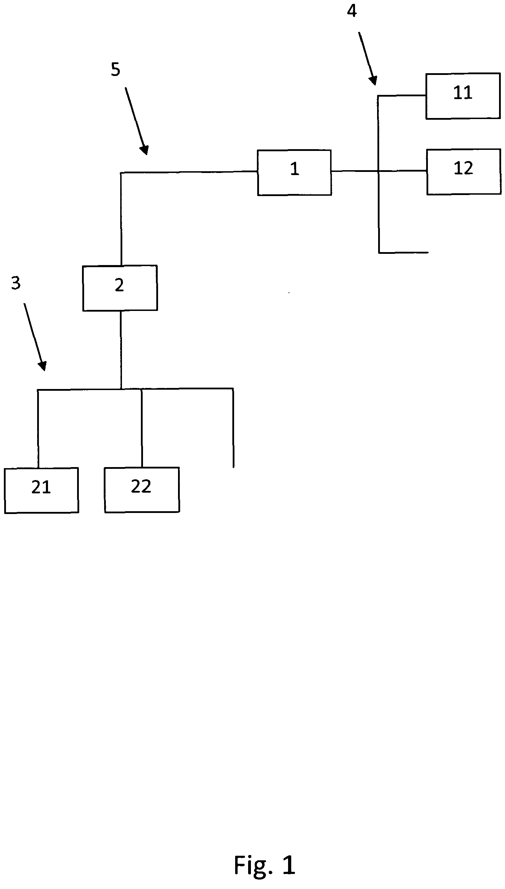

- Fig. 1: ein Diagramm eines beispielhaften Haus-Netzwerks mit Hausgeräten, Gateways und TKS-Stationen und mehreren alternativen Ausführungsformen einer Sprachlogikeinheit.

In Fig. 1 ist ein Diagramm eines beispielhaften Haus-Netzwerks dargestellt, umfassend mehrere Hausgeräte 11, 12, 21, 22, und zwei Gateways 1, 2, wobei zwei der Hausgeräte 11, 12, 21, 22 als TKS-Stationen 21, 22 in einem Türkommunikationssystem (TKS) ausgebildet sind. Das Haus-Netzwerk umfasst außerdem insbesondere einen KNX-Bus 4, an dem ein Teil der Haus-Geräte 11, 12, insbesondere eine Alarmanlage 11 angeschlossen ist. Der KNX-Bus 4 ist über ein KNX-IP-Gateway 1 mit einem IP-Netzwerk 5 verbunden. Zudem umfasst das Haus-Netzwerk einen TK-Bus 3 des TKS, an dem die TKS-Stationen 21, 22, insbesondere eine Türstation 21 und eine Wohnungsstation 22 angeschlossen sind. Der TK-Bus 3 ist insbesondere als analoger Zweidraht-Bus oder als digitaler TKS-IP-Bus ausgebildet. Der TK-Bus 3 ist über ein TKS-IP-Gateway 2 mit dem IP-Netzwerk 5 verbunden. Über den TK-Bus 3 können insbesondere analoge Audio-Signale im Falle eines analogen Zweidraht-Bus bzw. digitale Audio-Daten im Falle eines digitalen TKS-IP-Bus auf den TKS-Stationen 21, 22 ausgegeben werden. Dazu umfassen die TKS-Stationen 21, 22 einen Lautsprecher und mehrere Tasten zur Bedienung.

Eine Sprachlogikeinheit 6a, 6b, 6c, 6d dient zur Zuordnung von Zuständen und/oder Ereignissen eines Hausgerätes 11, 12, 21, 22 zu Sprachnachrichten, zur Auswahl der zugeordneten Sprachnachricht aus einer Liste von vordefinierten Sprachnachrichten und zur Übermittlung der ausgewählten Sprachnachricht zu einer TKS-Station 21, 22. Dazu enthält die Sprachlogikeinheit eine Zuordnungstabelle, in der jedem Zustand bzw. jedem Ereignis eine Sprachnachricht logisch zugeordnet wird. Die ausgewählte Sprachnachricht wird als analoges Audio-Signal oder als digitaler Audio-Datenstrom zur Ausgabe an eine TKS-Station 21, 22 übermittelt.

In Fig. 1 sind mehrere alternative Ausführungsformen einer Sprachlogikeinheit 6a, 6b, 6c, 6d zur alternativen Durchführung des erfindungsgemäßen Verfahrens dargestellt. Bei der ersten Ausführungsform ist die Sprachlogikeinheit 6a als separates Gerät an dem IP-Netzwerk 5 angeschlossen. Bei der zweiten Ausführungsform ist die Sprachlogikeinheit 6b als zusätzliches Hardware- und/oder Software-Modul eines Gateways, insbesondere des KNX-IP-Gateways 1 ausgebildet und in diesem integriert. Bei der dritten Ausführungsform ist die Sprachlogikeinheit 6c als zusätzliches Hardware- und/oder Software-Modul des TKS-IP-Gateways 2 ausgebildet und in diesem integriert. Bei der vierten Ausführungsform ist die Sprachlogikeinheit 6d als separates Gerät an dem TK-Bus 3 angeschlossen.

Je nach Ausführungsform unterscheidet sich die Signalisierung und Kommunikation mit der Sprachlogikeinheit 6a, 6b, 6c, 6d, um einerseits die Zustände und Ereignisse der Hausgeräte 11, 12, 21, 22 an die Sprachlogikeinheit 6a, 6b, 6c, 6d zu übermitteln und um andererseits gespeicherte Sprachnachrichten für die Sprachlogikeinheit 6a, 6b, 6c, 6d zur Verfügung zu stellen und an die TKS-Stationen 21, 22 zu übermitteln. Sowohl eine analoge Signalisierung und Kommunikation, insbesondere über den TK-Bus, als auch eine digitale, insbesondere IP basierte, Signalisierung und Kommunikation ist möglich.

Erfindungsgemäß wird ein Zustand und/oder ein Ereignis mindestens eines Hausgerätes 11, 12, 21, 22 erfasst. Die Erfassung des Zustandes und/oder des Ereignisses kann zum Beispiel von der Sprachlogikeinheit 6a, 6b, 6c, 6d selbständig, z.B. über eine direkte Kommunikation mit den Hausgeräten 11, 12, 21, 22 erfolgen. Zum Beispiel wird der Zustand anhand einer eindeutigen Identifikationsnummer erfasst, die von der Sprachlogikeinheit 6a, 6b, 6c, 6d aus dem Hausgerät 11, 12, 21, 22 ausgelesen wird. Danach wird durch die Sprachlogikeinheit 6a, 6b, 6c, 6d eine Sprachnachricht basierend auf dem Zustand und/oder dem Ereignis anhand der Zuordnungstabelle aus der Liste der vordefinierten Sprachnachrichten ausgewählt. Die Liste der vordefinierten Sprachnachrichten enthält Sprachnachrichten, welche jeweils einen Zustand eines bestimmten Hausgerätes 11, 12, 21, 22 als gesprochene Wörter, Teilsätze oder Sätze beschreiben. Insbesondere sind die Sprachnachrichten in digitaler Form unkomprimiert, insbesondere im WAV-Format, oder komprimiert, insbesondere im MP3-Format, als Audio-Dateien insbesondere in der Sprachlogikeinheit 6a, 6b, 6c, 6d gespeichert. Alternativ können die Sprachnachrichten auch in Form des Audiostreamings oder als Fileserver von einem weiteren Gerät im Haus-Netzwerk, insbesondere von einem Network-Attached-Storage (NAS), welches an das IP-Netzwerk 5 angeschlossen ist, von der Sprachlogikeinheit 6a, 6b, 6c, 6d geladen werden.

Alternativ kann die Erfassung des Zustandes und/oder des Ereignisses des Hausgerätes 11, 12, 21, 22 auch durch ein anderes Gerät im Haus-Netzwerk, insbesondere durch eines der Gateways 1, 2 erfolgen, das den Zustand und/oder das Ereignis des Hausgerätes 11, 12, 21, 22 durch eine bestimmte Logik oder anhand von Identifikationsnummern erfasst, und dann den Zustand und/oder das Ereignis an die Sprachlogikeinheit 6a, 6b, 6c, 6d übermittelt. Die Identifikationsnummer kann auch ein direkter Index in die Liste der vordefinierten Sprachnachrichten sein. Hierdurch kann die Logik und die Auswertung der Zustände und/oder der Ereignisse von Hausgeräten 11, 12, 21, 22 zentral in einem Gerät, insbesondere in einem der Gateways, erfolgen, und die Sprachlogikeinheit 6a, 6b, 6c, 6d übernimmt lediglich die Ausgabe der Sprachnachrichten an der / den betroffenen TKS-Stationen. Die Zuordnungstabelle könnte in diesem Fall in der Sprachlogikeinheit entfallen.

In einer weiteren Ausführungsform der Erfindung umfasst die Sprachlogikeinheit 6a, 6b, 6c, 6d eine Liste von gespeicherten textuellen Sprachsyntaxen, welche jeweils einen Zustand eines bestimmten Hausgerätes 11, 12, 21, 22 als geschriebene Wörter, Teilsätze oder Sätze beschreiben. Die Sprachsyntaxe sind insbesondere als ASCII-Texte digital gespeichert. Dabei umfasst die Sprachlogikeinheit 6a, 6b, 6c, 6d Mittel zur Sprachsynthese, insbesondere Mittel zur Text-to-Speech (TTS) Umwandlung, durch die die Sprachsyntaxe dynamisch in digitale Sprachnachrichten mit einer künstlichen Stimme umgewandelt werden. Alternativ erfolgt die Generierung der dynamischen Sprachnachrichten durch eine externe TTS-Einheit, so dass die Sprachlogikeinheit 6a, 6b, 6c, 6d über eine Schnittstelle mit der externen TTS-Einheit die ASCII-Texte übergibt und die resultierende dynamische Sprachnachricht als Audio-Datei oder als Audiostream übergeben bekommt oder an definierter Stelle im Netzwerk, insbesondere auf einem NAS zur Verfügung gestellt bekommt.

Zur Auswahl der Sprachnachrichten enthält die Sprachlogikeinheit 6a, 6b, 6c, 6d beispielhaft eine Zuordnungstabelle, in der jeder möglichen Identifikationsnummer eines Zustandes bzw. eines Ereignisses jeweils eine Indexnummer als Index in die Liste von vordefinierten Sprachnachrichten zugeordnet ist. Basierend auf der Identifikationsnummer wählt die Sprachlogikeinheit 6a, 6b, 6c, 6d die jeweilige Indexnummer aus der Zustandstabelle aus. Über die Indexnummer wird die zugehörige Sprachnachricht aus der Liste der Sprachnachrichten ausgewählt bzw. der zugehörige Sprachsyntax aus der Liste der zugehörigen Sprachsyntaxe ausgewählt und die entsprechende Sprachnachricht dynamisch generiert. Danach verbindet sich die Sprachlogikeinheit 6a, 6b, 6c, 6d entweder direkt oder über das TKS-IP-Gateway 2 mit einer TKS-Station 21, 22 und überträgt die ausgewählte bzw. dynamisch generierte Sprachnachricht z. B. an die Türstation 21 zur Ausgabe über den Lautsprecher.

In der ersten und zweiten Ausführungsform der Sprachlogikeinheit 6a, 6b überträgt die Sprachlogikeinheit 6a, 6b die Sprachnachricht als digitalen Audio-Datenstrom an das TKS-IP-Gateway 2, welches ihn an eine der TKS-Stationen 21, 22 zur Ausgabe weiterleitet, wobei im Falle eines analogen TK-Bus der digitale Audio-Datenstrom von dem TKS-IP-Gateway 2 in ein analoges Audio-Signal umgewandelt wird. In der dritten und vierten Ausführungsform der Sprachlogikeinheit 6c, 6d überträgt die Sprachlogikeinheit 6c, 6d die Sprachnachricht direkt an die TKS-Station über den TK-Bus, wobei im Falle eines analogen TK-Bus der digitale Audio-Datenstrom von der Sprachlogikeinheit 6c, 6d in ein analoges Audio-Signal umwandelt wird.

In einer weiteren Ausführungsform des Verfahrens werden mehrere Zustände und/oder Ereignisse eines Hausgerätes 11, 12, 21, 22 oder mehrerer Hausgeräte 11, 12, 21, 22 erfasst und einer Liste von ausgewählten Sprachnachrichten zugeordnet, und die Liste von ausgewählten Sprachnachrichten wird vor der Übermittlung an die TKS-Station 21, 22 zu einer komplexen Sprachnachricht zusammengesetzt. Die komplexe Sprachnachricht wird danach an eine TKS-Station 21, 22 zur Ausgabe über den Lautsprecher übertragen. Dabei werden zum Beispiel die Identifikationsnummern der Zustände und/oder der Ereignisse in der Reihenfolge der Erfassung nach dem oben beschriebenen Verfahren bearbeitet, wobei die einzelnen ausgewählten Sprachnachrichten der Reihe nach zu einer komplexen Sprachnachricht zusammengesetzt werden. Alternativ kann die Zuordnungstabelle auch jeder Identifikationsnummer eines Zustandes und/oder eines Ereignisses eine Prioritätszahl zuordnen, wobei die komplexe Sprachnachricht in der Reihenfolge der zugeordneten Prioritäten aus den einzelnen Sprachnachrichten zusammengesetzt wird.

In einer weiteren Ausführungsform werden über eine oder mehrere zusätzliche Identifikationsnummern zusätzliche Informationen über die anzuwählenden TKS-Stationen 21, 22, wie zum Beispiel die Adresse der TKS-Station 21, 22, oder zusätzliche Netzwerk-Steuersignale übergeben.

In einer weiteren Ausführungsform werden Texte, insbesondere ASCII-Texte, anstelle von Zuständen und Ereignisse an die Sprachlogikeinheit 6a, 6b, 6c, 6d übergeben. Die Sprachlogikeinheit 6a, 6b, 6c, 6d kann diese dann entweder selber oder durch eine externe TTS-Einheit in Sprachnachrichten umwandeln und an eine TKS-Station übermitteln.

In einer zusätzlichen Ausführungsform überträgt die Sprachlogikeinheit 6a, 6b, 6c, 6d Rückmeldungen der TKS-Station 21, 22 an die Hausgeräte 11, 12, 21, 22 oder die Gateways 1, 2. Dies dient zum Beispiel zur Kontrolle einer erfolgreichen Übertragung von Sprachnachrichten und/oder einer erfolgreichen Ausgabe der Sprachnachricht durch die TKS-Station 21, 22.

In einer weiteren Ausführungsform der Erfindung wird der Benutzer vor dem Ablauf des oben beschriebenen Verfahrens zunächst über eine Eingabeeinrichtung an der TKS-Station 21, 22, zum Beispiel über die PIN-Eingabe an einem Nummernfeld, mit der Sprachlogikeinheit 6a, 6b, 6c, 6d oder einem Gateway 1, 2 authentifiziert. Abhängig vom authentifizierten Benutzer werden unterschiedliche Zustände von der Sprachlogikeinheit 6a, 6b, 6c, 6d erfasst oder von einem Gateway 1,2 übermittelt. Außerdem können die Sprachnachrichten bzw. die Syntaxe in Abhängigkeit vom authentifizierten Benutzer für bestimmte Zustände variieren. Ferner können mit dieser Authentifizierung Ereignisse im Haus-Netzwerk ausgelöst werden, die wiederum als Reaktion zu Sprachnachrichten an den TKS-Stationen 21, 22 führen können.

Als Beispiel zu der dritten Ausführungsform der Sprachlogikeinheit 6a, 6b, 6c, 6d kann eine derartige Sprachlogikeinheit 6c verwendet werden, um den Zustand einer Alarmanlage 11 beim Scharfstellen der Alarmanlage 11 über eine Türstation 21 an den Benutzer zu übermitteln. Dazu gibt ein Benutzer über eine PIN-Eingabe an der Türstation 21 einen Zugangscode ein, der über das TKS-IP-Gateway 2 an das KNX-IP-Gateway 1 übermittel wird. Das KNX-IP-Gateway 1 authentifiziert den Benutzer und die benutze TKS-Station 21, sowie die hinter dem PIN in dem KNX-IP-Gateway 1 hinterlegte Aktion / Anforderung. Über den KNX-Bus 4 kommuniziert das KNX-IP-Gateway 1 und erfasst die Zustände der Alarmanlage 11, insbesondere, ob bestimmte Sensoren ein geöffnetes Fenster, eine geöffnete Tür oder sonstige Störungen der Alarmanlage 11 detektiert haben. Über die im KNX-IP-Gateway 1 programmierbare Logik sind speziellen Zuständen der Alarmanlage 11 spezielle Identifikationsnummern für die Sprachnachrichten zugeordnet, wie zum Beispiel für die Zustände "Scharfstellung fehlgeschlagen" und "Fenster Keller hinten offen". Die Identifikationsnummern der Zustände sowie die Identifikationsadresse der bedienten TKS-Station 21 werden nun über das IP-Netzwerk 5 an die integrierte Sprachlogikeinheit 6c im TKS-IP-Gateway 2 übertragen. Die Sprachlogikeinheit 6c im TKS-IP-Gateway 2 wählt die zu den Identifikationsnummern der Zustände zugehörigen Sprachnachrichten aus und setzt sie zu einer komplexen Sprachnachricht Scharfstellung fehlgeschlagen - Fenster Keller hinten offen" zusammen. Die komplexe Sprachnachricht wird daraufhin von der Sprachlogikeinheit 6c an die Türstation 21 übertragen und von der Türstation 21 über ihren Lautsprecher ausgegeben. Der Benutzer wird so über den Zustand der Alarmanlage informiert und kann entsprechende Maßnahmen durchführen.

## Patentansprüche

1. Verfahren zur Signalisierung von Zuständen und/oder Ereignissen von Hausgeräten (11, 12, 21, 22) mittels eines Türkommunikationssystems, wobei ein Zustand und/oder ein Ereignis mindestens eines Hausgerätes (11, 12, 21, 22) erfasst wird, und eine Sprachnachricht basierend auf dem Zustand und/oder dem Ereignis anhand einer gespeicherten Zuordnungstabelle ausgewählt wird, und die ausgewählte Sprachnachricht als analoges Audio-Signal oder als digitaler Audio-Datenstrom zur Ausgabe an eine TKS-Station (21, 22) übermittelt wird,
**dadurch gekennzeichnet, dass**
mehrere Zustände und/oder Ereignisse eines Hausgerätes (11, 12, 21, 22) oder mehrerer Hausgeräte (11, 12, 21, 22) erfasst und einer Liste von ausgewählten Sprachnachrichten zugeordnet werden, und die Liste von ausgewählten Sprachnachrichten vor der Übermittlung an die TKS-Station (21, 22) zu einer komplexen Sprachnachricht zusammengesetzt wird.

2. Verfahren nach Anspruch 1,
**dadurch gekennzeichnet, dass**
die zugeordnete Sprachnachricht aus einer Liste von digital gespeicherten Sprachnachrichten ausgewählt wird.

3. Verfahren nach Anspruch 1 oder 2,
**dadurch gekennzeichnet, dass**
die zugeordnete Sprachnachricht dynamisch generiert wird, indem der Zustand und/oder das Ereignis des Hausgerätes (11, 12, 21, 22) zunächst einem textuellen Sprachsyntax zugeordnet wird, der aus einer Liste von gespeicherten textuellen Sprachsyntaxen ausgewählt wird, und danach der zugeordnete textuelle Sprachsyntax in eine Sprachnachricht mittels Sprachsynthese umgewandelt wird.

4. Verfahren nach einem der Ansprüche 1 bis 3,
**dadurch gekennzeichnet, dass**
Rückmeldungen der TKS-Station (21, 22) an die Hausgeräte (11, 12, 21, 22) über den Status der Ausgabe der Sprachnachricht übertragen werden.

5. Sprachlogikeinheit (6a, 6b, 6c, 6d) für ein Telekommunikationssystem zur Durchführung des Verfahrens nach einem der Ansprüche 1 bis 4.

6. Sprachlogikeinheit (6a, 6b, 6c, 6d) nach Anspruch 5,
**dadurch gekennzeichnet, dass**
die Sprachlogikeinheit (6a, 6b, 6c, 6d) als separates Gerät zur Verbindung mit einem IP-Netzwerk ausgebildet ist.

7. Sprachlogikeinheit (6a, 6b, 6c, 6d) nach Anspruch 5,
**dadurch gekennzeichnet, dass**
die Sprachlogikeinheit (6a, 6d) als separates Gerät zur Verbindung mit einem IP-Netzwerk (5) oder mit einem TK-Bus (3) ausgebildet ist.

8. Sprachlogikeinheit (6a, 6b, 6c, 6d) nach Anspruch 5,
**dadurch gekennzeichnet, dass**
die Sprachlogikeinheit (6b, 6c) als zusätzliches Modul eines Gateways, eines TKS-IP-Gateways (2) oder eines KNX-IP-Gateways (1), ausgebildet und in diesem integriert ist.

9. Türkommunikationssystem mit einer Sprachlogikeinheit (6a, 6b, 6c, 6d) nach einem der Ansprüche 5 bis 8.

## Claims

1. Method for signalling states and/or events of household appliances (11, 12, 21, 22) by means of a door communication system, wherein a state and/or an event of at least one household appliance (11, 12, 21, 22) is sensed, and a voice message is selected on the basis of the state and/or the event using a stored association table, and the selected voice message is transmitted to a door communication system station (21, 22) as an analogue audio signal or as a digital audio data stream for output,
**characterized in that**
a plurality of states and/or events of a household appliance (11, 12, 21, 22) or of a plurality of household appliances (11, 12, 21, 22) are sensed and associated with a list of selected voice messages, and the list of selected voice messages is compiled to form a complex voice message prior to the transmission to the door communication system station (21, 22).

2. Method according to Claim 1,
**characterized in that**
the associated voice message is selected from a list of digitally stored voice messages.

3. Method according to Claim 1 or 2,
**characterized in that**
the associated voice message is generated dynamically by virtue of the state and/or the event of the household appliance (11, 12, 21, 22) first of all being associated with a textual language syntax which is selected from a list of stored textual language syntaxes, and then the associated textual language syntax being converted into a voice message by means of voice synthesis.

4. Method according to one of Claims 1 to 3,
**characterized in that**
acknowledgements from the door communication system station (21, 22) are transmitted to the household appliances (11, 12, 21, 22) about the status of the output of the voice message.

5. Voice logic unit (6a, 6b, 6c, 6d) for a telecommunication system for performing the method according to one of Claims 1 to 4.

6. Voice logic unit (6a, 6b, 6c, 6d) according to Claim 5,
**characterized in that**
the voice logic unit (6a, 6b, 6c, 6d) is in the form of a separate device for connection to an IP network.

7. Voice logic unit (6a, 6b, 6c, 6d) according to Claim 5,
**characterized in that**
the voice logic unit (6a, 6d) is in the form of a separate device for connection to an IP network (5) or to a door communication bus (3).

8. Voice logic unit (6a, 6b, 6c, 6d) according to Claim 5,
**characterized in that**
the voice logic unit (6b, 6c) is in the form of and integrated in an additional module of a gateway, of a door communication system IP gateway (2) or of a KNXIP gateway (1).

9. Door communication system having a voice logic unit (6a, 6b, 6c, 6d) according to one of Claims 5 to 8.

## Revendications

1. Procédé de signalisation d'états et/ou d'événements d'appareils ménagers (11, 12, 21, 22) au moyen d'un système de communication de porte, dans lequel un état et/ou un événement d'un appareil ménager (11, 12, 21, 22) est détecté et un message vocal est sélectionné sur la base de l'état et/ou de l'événement dans une table de correspondance stockée et le message vocal sélectionné est transmis sous la forme d'un signal audio analogique ou sous la forme d'un flux de données audio numérique pour être délivré à un poste TKS (de système de communication de porte) (21, 22),
**caractérisé en ce que** plusieurs états et/ou événements d'un appareil ménager (11, 12, 21, 22) ou de plusieurs appareils ménagers (11, 12, 21, 22) sont détectés et sont associés à une liste de messages vocaux sélectionnés, et la liste de messages vocaux sélectionnés est rassemblée en un message vocal complexe avant la transmission au poste TKS (21, 22).

2. Procédé selon la revendication 1,
**caractérisé en ce que** le message vocal associé est sélectionné dans une liste de messages vocaux numériques stockés.

3. Procédé selon la revendication 1 ou 2,
**caractérisé en ce que** le message vocal associé est généré dynamiquement en faisant en sorte que l'état et/ou l'événement de l'appareil ménager (11, 12, 21, 22) soit tout d'abord associé à une syntaxe vocale textuelle qui est sélectionnée dans une liste de syntaxes vocales textuelles stockées et que la syntaxe vocale textuelle associée soit ensuite convertie en un message vocal par synthèse vocale.

4. Procédé selon l'une quelconque des revendications 1 à 3,
**caractérisé en ce que** des messages de retour du poste TKS (21, 22) concernant l'état de la fourniture en sortie du message vocal sont transmis aux appareils ménagers (11, 12, 21, 22).

5. Unité logique vocale (6a, 6b, 6c, 6d) pour système de télécommunication destinée à mettre en oeuvre le procédé selon l'une quelconque des revendications 1 à 4.

6. Unité logique vocale (6a, 6b, 6c, 6d) selon la revendication 5,
**caractérisée en ce que** l'unité logique vocale (6a, 6b, 6c, 6d) est réalisée sous la forme d'un appareil destiné à être connecté à un réseau IP.

7. Unité logique vocale (6a, 6b, 6c, 6d) selon la revendication 5,
**caractérisée en ce que** l'unité logique vocale (6a, 6b) est réalisée sous la forme d'un appareil séparé destiné à être connecté à un réseau IP (5) ou à un bus TK (3).

8. Unité logique vocale (6a, 6b, 6c, 6d) selon la revendication 5,
**caractérisée en ce que** l'unité logique vocale (6b, 6c) est réalisée sous la forme d'un module supplémentaire d'une passerelle, d'une passerelle IP TKS (2) ou d'une passerelle IP KNX (1), et est intégrée à celle-ci.

9. Système de communication de porte comprenant une unité logique vocale (6a, 6b, 6c, 6d) selon l'une quelconque des revendications 5 à 8.
